# FASCICULE DE BREVET EUROPEEN

(11) **EP 2 507 947 B1**
(45) Date de publication et mention de la délivrance du brevet: **06.04.2016**
(21) Numéro de dépôt: 10782292.6
(22) Date de dépôt: 25.11.2010
(51) Int. Cl.: H04L 12/413, H04L 12/709

(54) **DISPOSITIF ET PROCÉDÉ DE DISTRIBUTION DE DONNÉES SUR UNE PLURALITÉ DE LIENS PHYSIQUES**
VORRICHTUNG UND VERFAHREN ZUR VERTEILUNG VON DATEN ÜBER MEHRERE PHYSISCHE VERBINDUNGEN
DEVICE AND METHOD FOR DISTRIBUTING DATA OVER A PLURALITY OF PHYSICAL LINKS

(30) Priorité: 30.11.2009 FR 0958516
(43) Date de publication de la demande: 10.10.2012
(73) Titulaire: Sagemcom Energy & Telecom SAS, 92500 Rueil-Malmaison (FR)
(72) Inventeur: TEBOULLE, Henri, F-92500 Rueil Malmaison (FR)
(74) Mandataire: Maillet, Alain
(86) Numéro de dépôt international: PCT/EP2010/068187
(87) Numéro de publication internationale: WO 2011/064285

(56) Documents cités:
- WO-A2-00/70827
- US-A1- 2008 095 189
- US-B1- 7 103 065

## Description

La présente invention concerne le domaine de l'agrégation de lien au niveau de la couche de liaison d'un système de transmission de données. Elle concerne plus particulièrement un dispositif et un procédé de distribution de données sur une pluralité de liens physiques.

L'agrégation de liens physiques pour pallier des insuffisances de bande passante est connue. En particulier, il est connu de distribuer les paquets de données de la couche de liaison sur une pluralité de liens physiques en fonction des données d'adressage contenues dans l'en-tête de ces paquets. Cette solution conduit à des solutions non adéquates où l'occupation réelle de chaque lien physique dépend des informations d'adressage qui ne sont pas corrélées avec les bandes passantes disponibles de chaque lien. D'autres solutions découpent les paquets de données reçues et les distribuent directement sur les liens physiques. Ces solutions nécessitent une synchronisation des liens physiques pour permettre de reconstruire les paquets à l'autre extrémité.

Le document US20080095189 décrit un système de désagrégation de paquets en blocs de données et d'agrégation desdits blocs de données en paquets pour une transmission sur de multiples liens physiques.

L'invention vise à résoudre les problèmes précédents en proposant un procédé de distribution de données basé sur le découpage des paquets de liaison en blocs. Chaque bloc est doté d'un numéro de séquence et d'un drapeau indiquant le dernier bloc du paquet. Les blocs sont acheminés indépendamment sur chaque lien physique. La distribution est faite en fonction des bandes passantes de chaque lien. Le procédé décrit permet de gérer souplement tout type de lien physique et ne nécessite pas de synchroniser les liens physiques. L'invention est définie dans les revendications 1 et 6.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre le schéma de fonctionnement de l'invention,
La Fig. 2 illustre le format des paquets de données d'un exemple de réalisation,
La Fig. 3 illustre le découpage des paquets de données dans un exemple de réalisation de l'invention,
La Fig. 4 illustre le fonctionnement de l'émetteur dans un exemple de réalisation de l'invention,
La Fig. 5 illustre le fonctionnement général du récepteur dans un exemple de réalisation de l'invention,
La Fig. 6 illustre le fonctionnement de la réception sur l'un des liens physiques dans un exemple de réalisation de l'invention,
La Fig. 7 illustre la reconstruction de la trame dans un exemple de réalisation de l'invention,
La Fig. 8 illustre l'architecture générale de l'émetteur, récepteur, selon un exemple de réalisation de l'invention,
La Fig. 9 illustre l'architecture du bloc de distribution selon un exemple de réalisation de l'invention,
La Fig. 10 illustre l'architecture du bloc d'agrégation selon un exemple de réalisation de l'invention,
La Fig. 11 illustre le fonctionnement général du processus d'émission selon un exemple de réalisation de l'invention,
La Fig. 12 illustre le fonctionnement général du processus de réception selon un exemple de réalisation de l'invention.

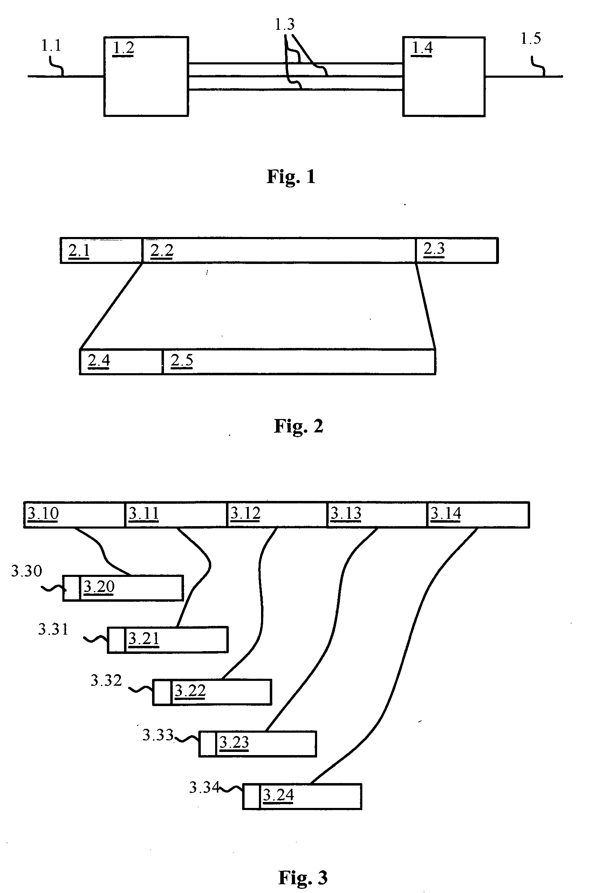

La Fig. 1 illustre le schéma de fonctionnement de l'invention. Celle-ci concerne l'agrégation de liens dans un réseau de communication par paquet. L'agrégation de lien intervient entre deux équipements réseau 1.2 et 1.4. Chacun de ces équipements dispose d'un premier lien, que l'on appelle le lien externe, qui lui permet de recevoir et d'émettre des données sous forme de paquets de données vers d'autres équipements. Le lien externe de l'équipement 1.2 est le lien 1.1. Le lien externe de l'équipement 1.4 est le lien 1.5.

Une pluralité de liens 1.3, que l'on appelle les liens internes, relie les deux équipements 1.2 et 1.4. Chacun de ses liens peut fonctionner selon sa propre technologie physique. Chacun de ces liens possède ces propres caractéristiques telles que sa bande passante, sa latence de transmission et autres.

L'invention est basée sur du matériel spécifique permettant la gestion des liens internes. En référence au modèle OSI des liens de communication, l'invention intervient au niveau de la couche de liaison pour distribuer les données reçues du lien externe entre les différents liens internes. Les données reçues sur ces différents liens internes sont agrégées pour reconstituer les paquets de données de la couche de liaison. L'invention est donc transparente pour la couche de liaison.

L'exemple de réalisation est basé sur une couche de liaison du type Ethernet selon la norme internationale *ISO*/*IEC 8802-3,* mais elle pourrait s'appliquer à d'autres standards de couches de liaison. La couche physique utilisée pour les liens peut être diverse, il peut s'agir de communication radio, fibre optique, cuivre ou autres. L'invention fonctionne indépendamment du support physique du lien. Certaines de ces couches physiques permettent d'assurer un débit garanti, tandis que d'autres ont un débit variable dans le temps. C'est typiquement le cas des transmissions radio sujettes aux variations du canal radio. Selon certains modes de réalisation, l'invention permet d'utiliser de manière optimale la bande passante variable de ce type de liens.

La Fig. 2 illustre le format des paquets de données d'un exemple de réalisation. Sur le support physique les paquets de données 2.2, typiquement Ethernet, sont transmis, précédés d'un préambule 2.1 et suivis d'une somme de contrôle 2.3, typiquement du type CRC (*Cyclic redundancy check* en anglais). Le paquet Ethernet lui-même est constitué d'un en-tête 2.4 et d'un corps de message 2.5 (*payload* en anglais). Les données transitant sur les liens externes sont donc transmises sous cette forme : des octets de préambule, des octets constituant le paquet Ethernet et des octets de CRC.

La Fig. 3 illustre le découpage des paquets de données dans un exemple de réalisation de l'invention. Lors de la réception des paquets de données, les octets de préambule et de CRC extérieurs au paquet lui-même sont écartés. Le paquet de données est alors divisé en blocs. Avantageusement, les blocs ont une taille fixe, mais ce n'est pas nécessaire. En particulier, les paquets de données reçus pouvant être de taille variable, le dernier bloc peut être également de taille variable. Selon l'exemple de réalisation, le paquet de données est divisé en blocs 3.10, 3.11, 3.12, 3.13 et 3.14, de 256 octets, le dernier bloc pouvant avoir une taille comprise entre 64 et 320 octets pour accommoder la taille du paquet de données reçu.

On ajoute à chaque bloc de données ainsi créé un en-tête 3.30, 3.31, 3.32, 3.33 et 3.34 qui a au moins deux fonctions. Une première est de permettre de mémoriser la séquence des blocs constituant le paquet de données. Pour ce faire, un numéro de séquence est stocké dans l'en-tête. Une seconde fonction est de marquer la fin du paquet de données. Pour ce faire, un drapeau signale le dernier bloc constituant un paquet de données. Selon l'exemple de réalisation, l'en-tête comporte deux octets. Le numéro de séquence est codé sur 14 bits, tandis qu'un quinzième bit sert de drapeau et est positionné à 1 pour le dernier bloc du paquet. Le seizième bit est inutilisé. Le corps de chaque bloc 3.20, 3.21, 3.22, 3.23 et 3.24 contient les données du paquet, respectivement les parties 3.10, 3.11, 3.12, 3.13 et 3.14 du paquet de données.

Le fait de choisir une taille de bloc relativement petite permet d'avoir un système souple dont la granularité va permettre de s'adapter à la diversité des liens physiques constituant l'agrégation. Une trop petite taille, toutefois, augmente la quantité des en-têtes rajoutés et nuit à l'utilisation de la bande passante. Un choix judicieux de cette taille de bloc est donc fait en fonction du type de liens physiques utilisé. Le fait de numéroter les blocs permet un ré-ordonnancement des blocs lors de la reconstruction du paquet et donc de gérer des liens dont la latence de communication est différente. En l'absence de ce mécanisme, il est nécessaire de synchroniser les liens pour assurer une reconstruction du paquet à l'arrivée, ce qui n'est pas nécessaire ici. On a donc une grande souplesse dans le choix des liens physiques utilisés pouvant marier diverses technologies.

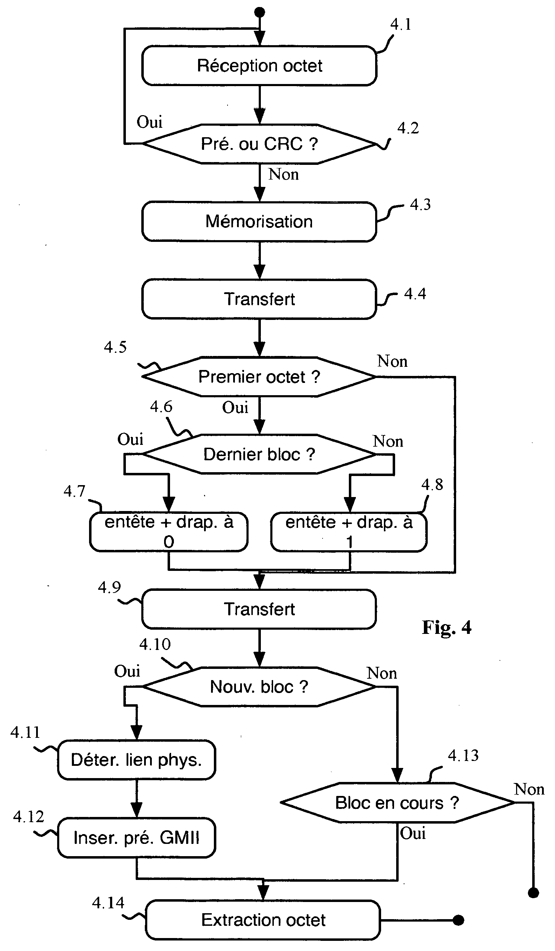

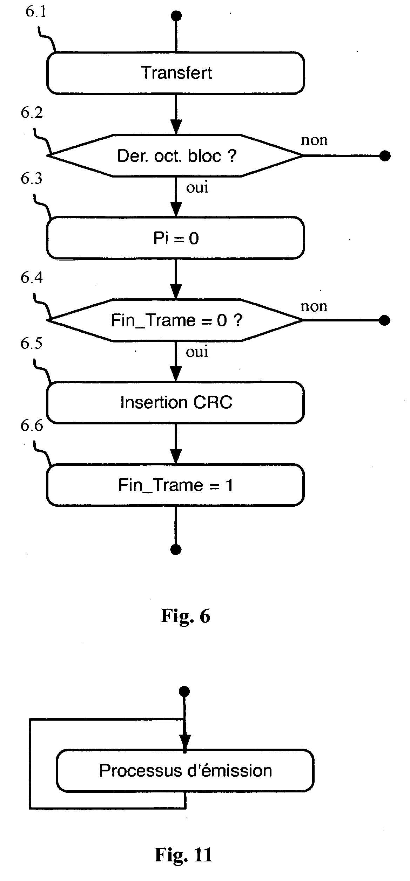

La Fig. 11 illustre le fonctionnement général de l'émetteur. Elle exprime le caractère répétitif du processus sous la forme d'une boucle sans fin. Le processus répété est illustré par la Fig. 4.

La Fig. 4 illustre le fonctionnement de l'émetteur dans un exemple de réalisation de l'invention. L'algorithme de réception fonctionne sur une base octet. Lors d'une première étape 4.1, on reçoit un octet. On teste alors s'il s'agit d'un octet de préambule ou de CRC, étape 4.2. Si c'est le cas, on écarte l'octet et on repasse à la réception de l'octet suivant. Sinon, on mémorise 4.3 l'octet reçu dans un tampon de réception. Ce tampon fonctionne selon le principe premier entré, premier sorti ou FIFO (*First In First Out* en anglais). L'étape 4.4 représente la sortie d'un octet de ce tampon de réception pour être transféré dans un tampon de construction de bloc. Avantageusement, elle comporte l'ajout d'un neuvième bit à l'octet pour mémoriser si l'octet est le dernier octet du bloc. On teste 4.5 alors s'il s'agit du premier octet du bloc courant. Si c'est le cas, on teste 4.6 alors s'il s'agit du dernier bloc du paquet de données reçu. Lorsqu'il s'agit du premier octet d'un bloc, on ajoute les deux octets d'en-tête en positionnant le numéro de séquence du bloc et le drapeau de dernier bloc, étapes 4.7 ou 4.8. Les octets du tampon de construction de bloc sont transférés lors de l'étape 4.9 au tampon de sortie.

Les octets du tampon de sortie sont extraits. On teste si l'octet extrait est le premier octet d'un nouveau bloc, étape 4.10. Si ce test est positif, on détermine le lien physique qui va être utilisé pour émettre le bloc lors de l'étape 4.11. Les liens physiques étant gérés via une interface GMII (*Gigabit Media Independent Interface* en anglais), on doit alors insérer un préambule GMII avant le premier octet, étape 4.12. On extrait alors l'octet lors de l'étape 4.14.

Dans le cas où l'on n'a pas de nouveau bloc à extraire, on teste si un bloc est en cours d'extraction, étape 4.13. Si c'est le cas, on extrait un octet lors de l'étape 4.14, sinon on ne fait rien lors de ce passage et on boucle sur l'ensemble de l'organigramme.

Le bloc est donc émis sur le lien physique sous la forme d'un paquet GMII. Ces paquets sont normalement terminés par une somme de contrôle de type CRC. Selon les implémentations des interfaces GMII, les paquets GMII dont la somme de contrôle est erronée seront acceptés ou pas. Avantageusement, on insère donc un CRC valide du bloc à la fin de celui-ci, cette étape n'est pas représentée sur la figure.

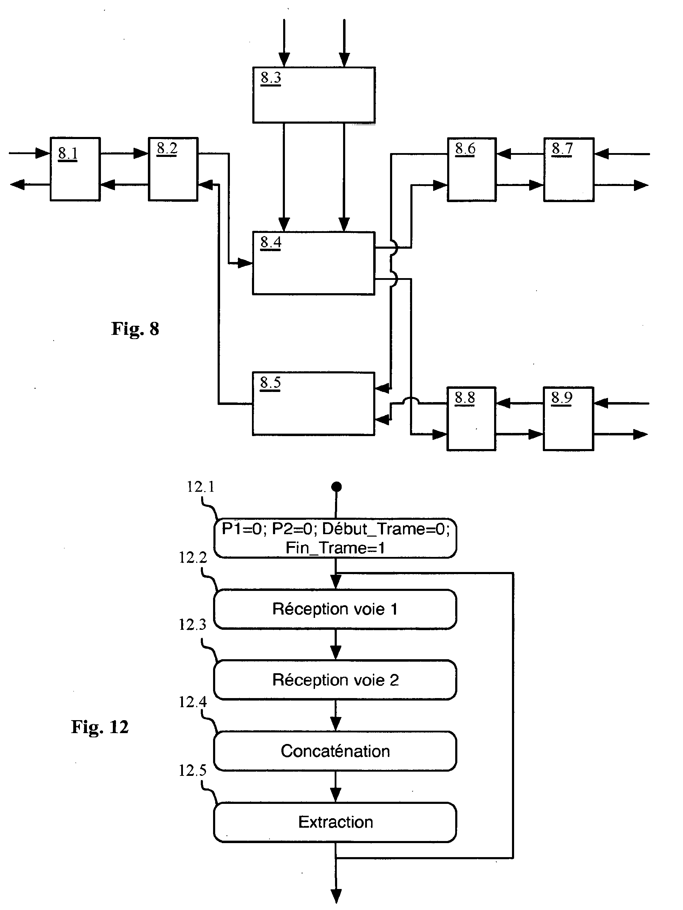

La Fig. 12 illustre le fonctionnement général du processus de réception. Lors d'une première étape d'initialisation 12.1, une variable P1 est initialisée à 0 pour signifier qu'aucune extraction de bloc n'est en cours sur la voie 1. Une variable P2 est initialisée à 0 pour signifier qu'aucune extraction de bloc n'est en cours sur la voie 2. Une variable Début_Trame est initialisée à 0 pour signifier que l'on est en début de trame. Une variable Fin_Trame est initialisée à 1 pour signifier que l'on n'est pas en fin de trame. Ces variables sont utilisées comme sémaphore pour, respectivement, l'insertion d'un en-tête et d'une somme de contrôle en début et en fin de trame. Ensuite, on entame une boucle sans fin sur une étape de réception voie 1 12.2, une étape de réception voie 2 12.3, une étape de concaténation 12.4 et une étape d'extraction du tampon de sortie 12.5. Ces étapes vont être détaillées dans les figures décrites ci-dessous.

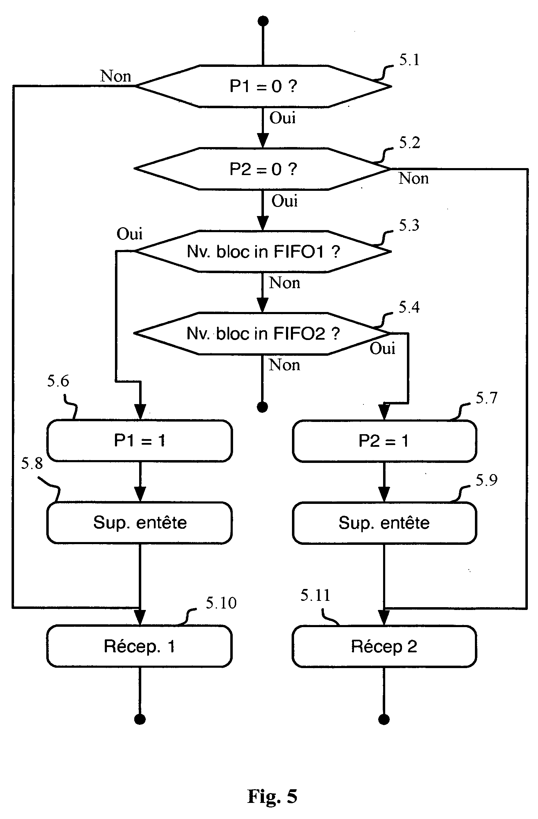

La Fig. 5 détaille le fonctionnement du récepteur dans un exemple de réalisation de l'invention. Selon l'exemple de réalisation de l'invention, deux liens physiques constituent l'agrégation. Toutefois, le procédé décrit s'étend naturellement à une pluralité de liens physiques. Une variable d'état est utilisée par lien et appelée Pi où i est le numéro du lien physique. L'algorithme commence par tester ces variables pour déterminer si un bloc est en cours de réception sur l'un des liens, c'est-à-dire si l'une des variables est à 1. Ce sont les étapes 5.1 et 5.2. Si un bloc est en cours de réception, on passe directement à l'étape de réception dudit bloc 5.10 ou 5.11. Si aucun bloc n'est en cours de réception, on teste si un nouveau bloc est disponible sur l'un des liens, étapes 5.3 et 5.4. Si c'est le cas, on positionne la variable d'état correspondante à 1, étapes 5.6 et 5.7. On supprime ensuite les 2 octets d'en-tête du bloc, étapes 5.8 et 5.9. Le drapeau indiquant qu'un bloc est le dernier bloc du paquet qui est présent dans l'en-tête est mémorisé dans une variable d'état appelée « Fin_Trame ». Le mot trame est ici utilisé pour désigner un paquet de données de la couche de liaison. On entame ensuite l'étape de réception sur ce lien physique 5.10 ou 5.11. Les numéros de séquence seront utilisés pour vérifier l'ordre des blocs et pour reconstruire le paquet dans le bon ordre.

Il faut noter qu'au préalable, les octets de préambule GMII et des éventuels CRC GMII auront été écartés.

La Fig. 6 illustre le fonctionnement de la réception sur l'un des liens physiques dans un exemple de réalisation de l'invention. Lors de l'étape 6.1, un octet est transféré du tampon de réception du lien physique vers le tampon de reconstruction du paquet. On teste ensuite s'il s'agit du dernier octet du bloc, étape 6.2. Si c'est le cas on positionne, étape 6.3, la variable Pi du lien physique courant à 0 pour indiquer la fin de l'étape de réception d'un bloc sur ce lien physique. On teste alors si le bloc extrait est le dernier bloc du paquet à reconstruire lors de l'étape 6.4, par le test de la variable Fin_Trame. Si c'est le cas, on calcule et on insère le CRC du paquet reconstruit, étape 6.5, et on positionne la variable Fin_Trame à 1, étape 6.6.

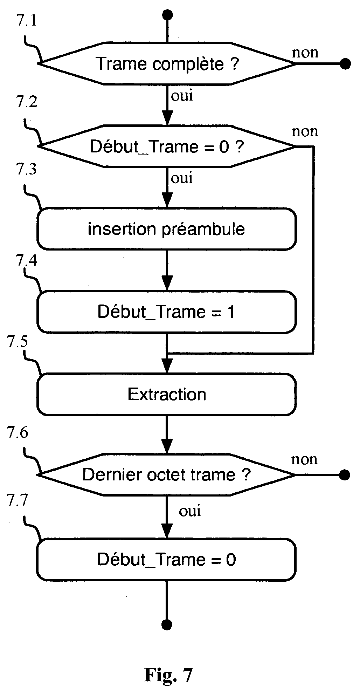

La Fig. 7 illustre la reconstruction de la trame dans un exemple de réalisation de l'invention. Lors de l'étape 7.1, on teste si le paquet de données est complet. Si c'est le cas, on teste si l'on est positionné en début de trame, étape 7.2, par un test Début_Trame = 0. Dans ce cas, on insère un préambule GMII, étape 7.3, on positionne la variable Début_Trame à 1, étape 7.4. On peut alors extraire un octet du tampon vers le lien externe, étape 7.5. Si cet octet est le dernier octet de la trame, étape 7.6, on positionne la variable Début_Trame à 0 lors de l'étape 7.7. On extrait ainsi les trames, octet par octet, pour les émettre sur le lien externe.

La Fig. 8 illustre l'architecture générale de l'émetteur, récepteur, selon un exemple de réalisation de l'invention. Les liens physiques utilisent un module dit « serdes » de sérialisation / désérialisation, 8.1, 8.7 et 8.9, couplé respectivement à un module GMII, 8.2, 8.6 et 8.8. Les modules 8.1 et 8.2 représentent le lien externe, tandis que les modules 8.6 et 8.7, respectivement 8.8 et 8.9, représentent les liens physiques internes. Les données reçues du lien externe sont dirigées vers un module de distribution 8.4 chargé de construire les blocs et de les distribuer sur les liens physiques. Ce module fonctionne selon les algorithmes décrits ci-dessus. Les blocs reçus des liens physiques internes sont dirigés vers un module d'agrégation 8.5 chargé de la reconstruction des paquets de données de la couche de liaison selon les algorithmes définis ci-dessus.

Avantageusement, le dispositif reçoit des informations en temps réel sur la bande passante disponible sur chacun des liens internes. Ces informations correspondent à un mode dit ACM *(Adaptative Code Modulation* en anglais) disponible notamment pour les liens radio. Ces informations sont alors reçues par un module 8.3 de gestion des débits. Ce module 8.3 fournit alors au module de distribution 8.4 une information sur les débits courants disponibles sur les liens physiques sous la forme d'un signal. Ces informations seront utilisées par le module de distribution pour répartir les données entre les liens internes en fonction de cette bande passante disponible.

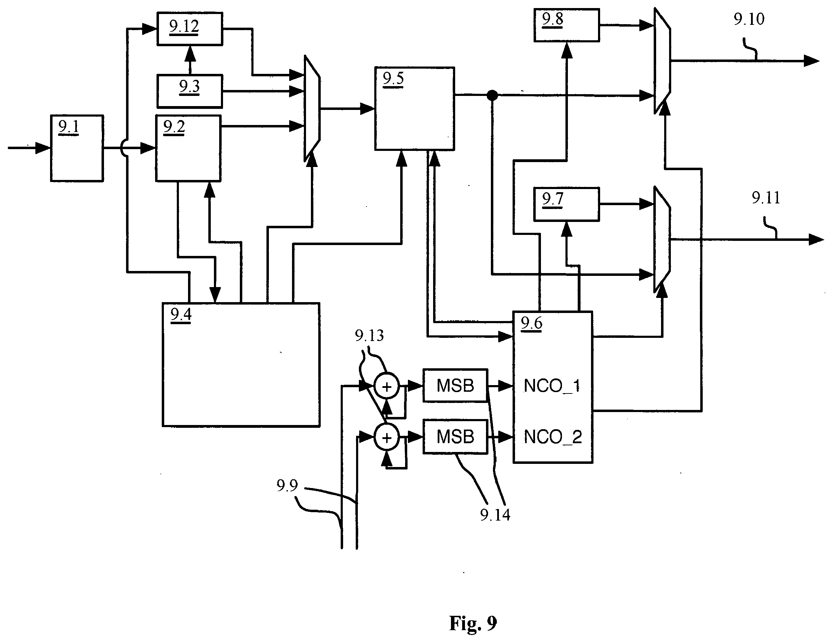

La Fig. 9 illustre l'architecture du module de distribution selon un exemple de réalisation de l'invention. Les paquets de données arrivent du lien externe vers le tampon de réception 9.1. Les octets sont alors transférés au tampon de bloc 9.2. Ce tampon fait une taille de 320 octets dans l'exemple de réalisation, c'est-à-dire la taille maximum d'un bloc. Sous le contrôle du module d'état 9.4, les blocs sont alors transférés dans un tampon de mémorisation des blocs 9.5. Un module d'insertion des en-têtes de bloc 9.3, permet d'insérer les 2 octets d'en-têtes de blocs sous le contrôle du module d'état en positionnant le numéro de séquence du bloc et la variable de dernier bloc de la trame. Un module 9.12 est chargé de calculer un CRC et de l'insérer au besoin dans le tampon 9.5 sous le contrôle du module d'état. Ce module est optionnel, en particulier dans le cas où les modems acceptent des paquets avec un CRC GMII erroné. Un signal émis par le tampon 9.2 vers le module d'état permet la détection des trames supérieures à 320 octets. De cette façon, le module d'état 9.4 est prévenu en temps réel que le tampon 9.2 est plein, et donc qu'il y a au moins un bloc complémentaire à recevoir pour le paquet de données en cours.

Le module 9.6 contrôle la détermination du lien physique sur lequel va être émis chaque bloc, ainsi que l'émission des blocs vers les voies 9.10 et 9.11. Avantageusement, il reçoit les signaux 9.9 des débits courants de chacun des liens physiques. Il les utilise pour générer un signal de synchronisation proportionnel au débit du lien pour chacun des liens. Cette génération est faite par un NCO (*Numerically Controlled Oscillator* en anglais) en fonction de la valeur de débit reçue. Plus précisément, grâce aux informations sur les débits courants reçus, 9.9, les NCO constitués de l'additionneur 9.13 et du sélectionneur de bit de poids fort MSB 9.14 permettent de générer un signal de synchronisation proportionnel au débit de la voie considérée, pour chaque voie sortante. On optimise ainsi de manière fine l'utilisation de la bande passante autorisée pour chaque voie.

Le signal issu du module 9.5 vers le module 9.6 indique que ce tampon a un bloc à transmettre. Un signal en retour appelé Enable_fifo, permet au module 9.6 de contrôler la sortie octet par octet du bloc. Les signaux NCO_1 et NCO_2 reçus des NCO sont respectivement synchrones octet des voies de transmission 1 et 2.

Pour chacune des voies 1 et 2, on gère des compteurs courants CC_1 et CC_2 sur 16 bits initialisés à 0. A chaque top de 125 MHz, en ce qui concerne le compteur CC_1 de la voie 1, on implémente le comportement suivant :
Quand « NCO_1 » = 0 et « Enable_fifo » = 1, CC_1 = CC_1 + 1 en cours de bloc et CC_1 = CC_1 + 6 si l'on est en début de bloc pour tenir compte de l'encapsulation GFP (*Generic Framing Procedure* en anglais), qui est dans notre exemple de réalisation la méthode d'encapsulation utilisée pour transporter la trame Ethernet via le modem.
Quand « NCO_1 » = « Enable_fifo », CC_1 reste inchangé.
Quand « NCO_1 » = 1 et « Enable_fifo » = 0, CC_1 = CC_1 - 1, CC_1 restant toujours au moins égal à 0.

CC_1 fonctionne comme un intégrateur représentatif du déséquilibre entre le nombre d'octets effectivement transmis par le modem situé après la voie 1 et le nombre d'octets extraits du tampon 9.5.

Un intégrateur symétrique est implémenté pour la voie 2.

Quand un bloc complet a été extrait du tampon 9.5, on compare les compteurs CC_1 et CC_2 à un seuil programmable pour chaque voie, Seuil_1 et Seuil_2. Si CC_1 < Seuil_1 et CC_1 <= CC_2, on décide de sortir le prochain bloc du tampon 9.5 vers la voie 1. De même, si CC_2 < Seuil_2 et CC_2 < CC_1, on décide de sortir le prochain bloc du tampon 9.5 vers la voie 2. Dans les autres cas, on ne fait rien.

Le module 9.6 contrôle la sortie des octets constituant les blocs du tampon de mémorisation des blocs ainsi que l'insertion d'un préambule GMII à l'aide des modules d'insertion 9.8 et 9.7 pour constituer les signaux 9.10 et 9.11 émis sur chacun des liens physiques. Ces signaux sont donc caractérisés en ce qu'ils sont constitués de blocs de données représentant une séquence ordonnée d'octets d'un paquet de données de la couche liaison. De plus, chacun de ces blocs comporte un en-tête comportant un numéro de séquence et un drapeau pour indiquer que le bloc courant est le dernier bloc du paquet de données.

De manière optionnelle, le module d'insertion de CRC 9.12 est ajouté à la fin de chaque bloc pour satisfaire les implémentations de GMII qui n'acceptent pas les blocs ayant un CRC erroné.

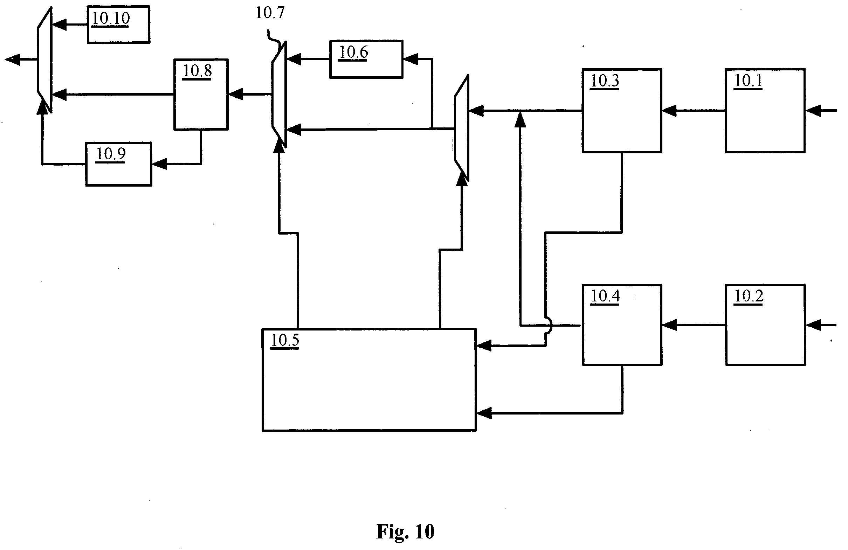

La Fig. 10 illustre l'architecture du module d'agrégation selon un exemple de réalisation de l'invention. Les données arrivant de chacun des liens internes sont donc constituées de blocs selon l'invention. Ces blocs sont traités par des modules de retrait des préambules GMII 10.1 et 10.2 et aussi, en option, de retrait du CRC GMII. Les blocs sont alors mémorisés dans des tampons de réception, un par lien, 10.3 et 10.4. Le module d'état 10.5 contrôle alors l'agrégation de ces modules. Pour ce faire, il reçoit les numéros de séquence de chaque bloc et le niveau de remplissage des tampons de réception. Il détermine alors le tampon devant être vidé du contenu d'un bloc, il s'agit du bloc dont le numéro est le prochain attendu dans l'ordre chronologique. Les 2 octets d'en-tête du bloc sont écartés et son corps est transféré au tampon de sortie 10.8. Le contrôle du sélecteur 10.7 permet d'insérer le CRC du paquet de données à la fin du dernier bloc de la trame à l'aide du module de calcul de CRC 10.6. L'émission de la trame sur le lien externe est gérée par le module 10.9 qui gère l'émission des données et l'insertion en tête de chaque trame d'un préambule GMII préparé par le module d'insertion de préambule 10.10.

L'invention ici décrite dans le cadre Ethernet et à l'aide d'un exemple de réalisation comportant deux liens physiques s'étend naturellement à un nombre quelconque de liens physiques. Elle peut s'appliquer à tout protocole de liaison et ce quelle que soit la technologie physique utilisée pour les différents liens.

## Revendications

1. Dispositif de distribution de données comportant :
- un lien externe permettant la réception de paquets de données ;
- une pluralité de liens physiques internes (9.10, 9.11) permettant l'émission de paquets de données ;
- des moyens de découper les paquets de données reçus sur le lien externe en une pluralité de blocs de données ;
- des moyens (9.3) pour ajouter à chaque bloc un en-tête comportant un numéro de séquence dudit bloc au sein du paquet de données reçu et un drapeau marquant le dernier bloc du paquet ;
- des moyens (9.6) pour déterminer le lien physique devant être utilisé pour l'émission de chacun desdits blocs ;
- des moyens de réception d'une information (9.9) sur le débit de chacun des liens physiques internes
- des moyens pour émettre lesdits blocs sur le lien physique ainsi déterminé,
**caractérisé en ce qu'**il comporte, pour chaque lien physique :
- un intégrateur représentatif d'un déséquilibre entre un nombre d'octets desdits blocs émis sur ledit lien physique et un nombre d'octets desdits blocs extraits d'un tampon mémoire (9.5) où sont stockés lesdits blocs avant émission,
l'intégrateur d'un premier lien physique comporte un premier compteur CC_1 du nombre d'octets desdits blocs émis sur ledit premier lien physique, l'intégrateur d'un second lien physique comporte un second compteur CC_2 du nombre d'octets desdits blocs émis sur ledit second lien physique, la valeur de chaque compteur évoluant en fonction d'un signal proportionnel au débit de chacun des liens physiques internes fourni par les moyens (9.13, 9.14) pour générer un signal de synchronisation et d'un signal permettant de contrôler une sortie octet par octet dudit bloc fourni par les moyens (9.6) pour déterminer le lien physique devant être utilisé pour l'émission de chacun desdits blocs,
et **en ce que** le lien physique devant être utilisé pour l'émission de chacun desdits blocs est déterminé de la façon suivante lorsqu'un bloc est extrait dudit tampon mémoire :
- si la valeur du premier compteur CC_1 est inférieure à un premier seuil Seuil_1 et que la valeur du premier compteur CC_1 est inférieure ou égale à la valeur du second compteur CC_2 le premier lien physique est utilisé pour l'émission dudit bloc ;
- si la valeur du second compteur CC_2 est inférieure à un second seuil Seuil_2 et que la valeur du second compteur CC_2 est inférieure à la valeur du premier compteur CC_1 le second lien physique est utilisé pour l'émission dudit bloc.

2. Dispositif de distribution de données selon la revendication 1, **caractérisé en ce qu'**il comporte des moyens (9.7, 9.8) d'insertion d'un préambule au début de chaque bloc.

3. Dispositif de distribution de données selon la revendication 2, **caractérisé en ce que** les liens physiques ayant une interface GMII, les moyens d'insertion (9.7, 9.8) d'un préambule sont des moyens d'insertion d'un préambule GMII.

4. Dispositif de distribution de données selon la revendication 1, **caractérisé en ce qu'**il comporte en outre des moyens (9.12) de calcul et d'insertion d'une somme de contrôle du bloc en fin de bloc.

5. Dispositif de distribution de données selon l'une des revendications 1 à 4, **caractérisé en ce qu'**il comporte en outre des moyens de suppression de préambule et/ou de somme de contrôle des paquets de données reçus.

6. Procédé de distribution de données au sein d'un dispositif comportant un lien externe pour la réception des données et une pluralité de liens physiques internes pour l'émission des données comportant :
- une étape de réception d'un paquet de données ;
- une étape de découpage dudit paquet en blocs ;
- une étape (4.7, 4.8) d'insertion d'un en-tête pour chaque bloc comportant un numéro de séquence dudit bloc au sein du paquet de données reçu et un drapeau marquant le dernier bloc du paquet ;
- une étape (4.11) de détermination du lien physique interne pour l'émission de chaque bloc ;
- une étape de réception d'un signal (9.9) relatif au débit de chacun des liens physiques internes
- une étape d'émission de chaque bloc sur le lien physique déterminé ;
**caractérisé en ce que** l'étape de détermination du lien physique interne pour l'émission de chaque bloc est effectuée à l'aide, pour chaque lien physique, d'un intégrateur représentatif d'un déséquilibre entre un nombre d'octets desdits blocs émis sur ledit lien physique et un nombre d'octets desdits blocs extraits d'un tampon mémoire (9.5) où sont stockés lesdits blocs avant émission,
l'intégrateur d'un premier lien physique comporte un premier compteur CC_1 du nombre d'octets desdits blocs émis sur ledit premier lien physique, l'intégrateur d'un second lien physique comporte un second compteur CC_2 du nombre d'octets desdits blocs émis sur ledit second lien physique, la valeur de chaque compteur évoluant en fonction d'un signal proportionnel au débit de chacun des liens physiques internes et d'un signal permettant de contrôler une sortie octet par octet dudit bloc,
et **en ce que** le lien physique devant être utilisé pour l'émission de chacun desdits blocs est déterminé de la façon suivante lorsqu'un bloc est extrait dudit tampon mémoire :
- si la valeur du premier compteur CC_1 est inférieure à un premier seuil Seuil_1 et que la valeur du premier compteur CC_1 est inférieure ou égale à la valeur du second compteur CC_2 le premier lien physique est utilisé pour l'émission dudit bloc ;
- si la valeur du second compteur CC_2 est inférieure à un second seuil Seuil_2 et que la valeur du second compteur CC_2 est inférieure à la valeur du premier compteur CC_1 le second lien physique est utilisé pour l'émission dudit bloc.

7. Procédé de distribution de données selon la revendication 6, **caractérisé en ce qu'**il comporte une étape (4.12) d'insertion d'un préambule au début de chaque bloc.

8. Procédé de distribution de données selon la revendication 7, **caractérisé en ce que** les liens physiques ayant une interface GMII, l'étape (4.12) d'insertion d'un préambule est une étape d'insertion d'un préambule GMII.

9. Procédé de distribution de données selon l'une des revendication 6 **caractérisé en ce qu'**il comporte en outre une étape de calcul et d'insertion d'une somme de contrôle du bloc en fin de bloc.

10. Procédé de distribution de données selon l'une des revendication 6 à 9, **caractérisé en ce qu'**il comporte en outre une étape de suppression de préambule et/ou de somme de contrôle des paquets de données reçus.

## Patentansprüche

1. Vorrichtung zur Verteilung von Daten, welche Folgendes umfasst:
- eine externe Verbindung, die den Empfang von Datenpaketen erlaubt,
- mehrere interne physische Verbindungen (9.10, 9.11), die die Übertragung von Datenpaketen erlauben,
- Mittel zum Aufteilen der über die externe Verbindung empfangenen Datenpakete in mehrere Datenblöcke,
- Mittel (9.3) zum Hinzufügen eines Kopfes zu jedem Block, wobei der Kopf eine Sequenznummer des Blocks im empfangenen Datenpaket und eine den letzten Block des Pakets kennzeichnende Markierung umfasst,
- Mittel (9.6) zum Bestimmen der physischen Verbindung, die für die Übertragung jedes der Blöcke benutzt werden muss,
- Mittel zum Empfangen einer Information (9.9) über die Bitrate jeder der internen physischen Verbindungen,
- Mittel zum Übertragen der Blöcke über die bestimmungsgemäß bestimmte physische Verbindung,
**dadurch gekennzeichnet, dass** sie für jede physische Verbindung Folgendes umfasst:
- einen Integrator, der für eine Ungleichheit zwischen einer Byteanzahl der über die physische Verbindung übertragenen Blöcke und einer Byteanzahl der aus einem Pufferspeicher (9.5), wo die Blöcke vor der Übertragung gespeichert werden, extrahierten Blöcke repräsentativ ist,
wobei der Integrator einer ersten physischen Verbindung einen ersten Zähler CC_1 für die Byteanzahl der über die erste physische Verbindung übertragenen Blöcke umfasst, der Integrator einer zweiten physischen Verbindung einen zweiten Zähler CC_2 für die Byteanzahl der über die zweite physische Verbindung übertragenen Blöcke umfasst, wobei der Wert jedes Zählers sich als Funktion eines zur Bitrate jeder der durch die Mittel (9.13, 9.14) für die Erzeugung eines Synchronisationssignals bereitgestellten internen physischen Verbindungen proportionalen Signals und eines Signals ändert, das es ermöglicht, eine Byte-pro-Byte-Ausgabe des durch die Mittel (9.6) zum Bestimmen der physischen Verbindung, die für die Übertragung jedes der Blöcke verwendet werden muss, bereitgestellten Blocks zu steuern,
und dass die physische Verbindung, die für die Übertragung jedes der Blöcke verwendet werden muss, in der folgenden Weise bestimmt wird, wenn ein Block aus dem Pufferspeicher extrahiert wird:
- falls der Wert des ersten Zählers CC_1 kleiner als eine erste Schwelle Thresh_1 ist, und der Wert des ersten Zählers CC_1 kleiner als oder gleich dem Wert des zweiten Zählers CC_2 ist, wird die erste physische Verbindung für die Übertragung des Blocks verwendet,
- falls der Wert des zweiten Zählers CC_2 kleiner als eine zweite Schwelle Thresh_2 ist, und der Wert des zweiten Zählers CC_2 kleiner als der Wert des ersten Zählers CC_1 ist, wird die zweite physische Verbindung für die Übertragung des Blocks verwendet.

2. Vorrichtung zur Verteilung von Daten nach Anspruch 1, **dadurch gekennzeichnet, dass** sie Mittel (9.7, 9.8) zum Einfügen einer Präambel am Beginn jedes Blocks umfasst.

3. Vorrichtung zur Verteilung von Daten nach Anspruch 2, **dadurch gekennzeichnet, dass**, falls die physischen Verbindungen ein GMII-Interface aufweisen, die Mittel (9.7, 9.8) zum Einfügen einer Präambel Mittel zum Einfügen einer GMII-Präambel sind.

4. Vorrichtung zur Verteilung von Daten nach Anspruch 1, **dadurch gekennzeichnet, dass** sie ferner Mittel (9.12) zum Berechnen und Einfügen einer Prüfsumme für den Block am Ende eines Blocks umfasst.

5. Vorrichtung zur Verteilung von Daten nach einem der Ansprüche 1 bis 4, **dadurch gekennzeichnet, dass** sie ferner Mittel zum Löschen der Präambel und/oder der Prüfsumme der empfangenen Datenpakete umfasst.

6. Verfahren zur Verteilung von Daten in einer Vorrichtung, welche eine externe Verbindung für den Empfang der Daten und mehrere interne physische Verbindungen für die Übertragung der Daten umfasst, wobei das Verfahren Folgendes umfasst:
- einen Schritt des Empfangens eines Datenpakets,
- einen Schritt des Aufteilens des Pakets in Blöcke,
- einen Schritt (4.7, 4.8) des Einfügens eines Kopfs für jeden Block, welcher eine Sequenznummer des Blocks in dem empfangenen Datenpaket und eine den letzten Block des Pakets kennzeichnende Markierung umfasst,
- einen Schritt (4.11) des Bestimmens der internen physischen Verbindung für die Übertragung jedes Blocks,
- einen Schritt des Empfangens eines Signals (9.9) bezüglich der Bitrate jeder der internen physischen Verbindungen,
- einen Schritt der Übertragung jedes Blocks über die bestimmte physische Verbindung,
**dadurch gekennzeichnet, dass** der Schritt des Bestimmens der internen physischen Verbindung für die Übertragung jedes Blocks für jede physische Verbindung unter Verwendung eines Integrators ausgeführt wird, der für eine Ungleichheit zwischen einer Byteanzahl der über die physische Verbindung übertragenen Blöcke und einer Byteanzahl der aus einem Pufferspeicher (9.5), wo die Blöcke vor der Übertragung gespeichert werden, extrahierten Blöcke repräsentativ ist,
wobei der Integrator einer ersten physischen Verbindung einen ersten Zähler CC_1 für die Byteanzahl der über die erste physische Verbindung übertragenen Blöcke umfasst, der Integrator einer zweiten physischen Verbindung einen zweiten Zähler CC_2 für die Byteanzahl der über die zweite physische Verbindung übertragenen Blöcke umfasst, wobei der Wert jedes Zählers sich als Funktion eines zur Bitrate jeder der internen physischen Verbindungen proportionalen Signals und eines Signals ändert, das es ermöglicht, eine Byte-pro-Byte-Ausgabe des Blocks zu steuern,
und dass die physische Verbindung, die für die Übertragung jedes der Blöcke verwendet werden muss, in der folgenden Weise bestimmt wird, wenn ein Block aus dem Pufferspeicher extrahiert wird:
- falls der Wert des ersten Zählers CC_1 kleiner als eine erste Schwelle Thresh_1 ist, und der Wert des ersten Zählers CC_1 kleiner als oder gleich dem Wert des zweiten Zählers CC_2 ist, wird die erste physische Verbindung für die Übertragung des Blocks verwendet,
- falls der Wert des zweiten Zählers CC_2 kleiner als eine zweite Schwelle Thresh_2 ist, und der Wert des zweiten Zählers CC_2 kleiner als der Wert des ersten Zählers CC_1 ist, wird die zweite physische Verbindung für die Übertragung des Blocks verwendet.

7. Verfahren zur Verteilung von Daten nach Anspruch 6, **dadurch gekennzeichnet, dass** es einen Schritt (4.12) des Einfügens einer Präambel am Beginn jedes Blocks umfasst.

8. Verfahren zur Verteilung von Daten nach Anspruch 7, **dadurch gekennzeichnet, dass**, falls die physischen Verbindungen ein GMII-Interface aufweisen, der Schritt (4.12) des Einfügens einer Präambel ein Schritt des Einfügens einer GMII-Präambel ist.

9. Verfahren zur Verteilung von Daten nach einem der Ansprüche 6, **dadurch gekennzeichnet, dass** es ferner einen Schritt des Berechnens und Einfügens einer Prüfsumme für den Block am Ende eines Blocks umfasst.

10. Verfahren zur Verteilung von Daten nach einem der Ansprüche 6 bis 9, **dadurch gekennzeichnet, dass** es ferner einen Schritt des Löschens der Präambel und/oder der Prüfsumme der empfangenen Datenpakete umfasst.

## Claims

1. Device for distributing data comprising:
- an external link allowing for the reception of data packets;
- a plurality of internal physical links (9.10, 9.11) allowing for the transmission of data packets;
- means for subdividing the data packets received over the external link into a plurality of data blocks;
- means (9.3) for adding to each block a header comprising a sequence number of said block within the received data packet and a flag marking the last block of the packet;
- means (9.6) for determining the physical link that has to be used for the transmission of each of said blocks;
- means for receiving an information item (9.9) on the bit rate of each of the internal physical links;
- means for transmitting said blocks over the duly determined physical link,
**characterized in that** it comprises, for each physical link:
- an integrator representative of an imbalance between a number of bytes of said blocks transmitted over said physical link and a number of bytes of said blocks extracted from a buffer memory (9.5) where said blocks are stored before transmission,
the integrator of a first physical link comprises a first counter CC_1 of the number of bytes of said blocks transmitted over said first physical link, the integrator of a second physical link comprises a second counter CC_2 of the number of bytes of said blocks transmitted over said second physical link, the value of each counter changing as a function of a signal proportional to the bit rate of each of the internal physical links supplied by the means (9.13, 9.14) for generating a synchronization signal and a signal making it possible to control a byte-by-byte output of said block supplied by the means (9.6) for determining the physical link that has to be used for the transmission of each of said blocks,
and **in that** the physical link that has to be used for the transmission of each of said blocks is determined in the following manner when a block is extracted from said buffer memory:
- if the value of the first counter CC_1 is below a first threshold Thresh_1 and the value of the first counter CC_1 is below or equal to the value of the second counter CC_2, the first physical link is used for the transmission of said block;
- if the value of the second counter CC_2 is below a second threshold Thresh_2 and the value of the second counter CC_2 is below the value of the first counter CC_1, the second physical link is used for the transmission of said block.

2. Device for distributing data according to Claim 1, **characterized in that** it comprises means (9.7, 9.8) for inserting a preamble at the start of each block.

3. Device for distributing data according to Claim 2, **characterized in that**, the physical links having a GMII interface, the means (9.7, 9.8) for inserting a preamble are means for inserting a GMII preamble.

4. Device for distributing data according to Claim 1, **characterized in that** it further comprises means (9.12) for calculating and inserting a checksum for the block at the end of a block.

5. Device for distributing data according to one of Claims 1 to 4, **characterized in that** it further comprises means for deleting the preamble and/or the checksum of the data packets received.

6. Method for distributing data in a device comprising an external link for the reception of the data and a plurality of internal physical links for the transmission of the data comprising:
- a step of reception of a data packet;
- a step of subdivision of said packet into blocks;
- a step (4.7, 4.8) of insertion of a header for each block comprising a sequence number of said block in the received data packet and a flag marking the last block of the packet;
- a step (4.11) of determination of the internal physical link for the transmission of each block;
- a step of reception of a signal (9.9) relating to the bit rate of each of the internal physical links;
- a step of transmission of each block over the determined physical link;
**characterized in that** the step of determination of the internal physical link for the transmission of each block is performed using, for each physical link, an integrator representative of an imbalance between a number of bytes of said blocks transmitted over said physical link and a number of bytes of said blocks extracted from a buffer memory (9.5) where said blocks are stored before transmission,
the integrator of a first physical link comprises a first counter CC_1 of the number of bytes of said blocks transmitted over said first physical link, the integrator of a second physical link comprises a second counter CC_2 of the number of bytes of said blocks transmitted over said second physical link, the value of each counter changing as a function of a signal proportional to the bit rate of each of the internal physical links and of a signal making it possible to control a byte-by-byte output of said block,
and **in that** the physical link that has to be used for the transmission of each of said blocks is determined in the following manner when a block is extracted from said buffer memory:
- if the value of the first counter CC_1 is below a first threshold Thresh_1 and the value of the first counter CC 1 is below or equal to the value of the second counter CC_2, the first physical link is used for the transmission of said block;
- if the value of the second counter CC_2 is below a second threshold Thresh_2 and the value of the second counter CC_2 is below the value of the first counter CC_1 the second physical link is used for the transmission of said block.

7. Method for distributing data according to Claim 6, **characterized in that** it comprises a step (4.12) of insertion of a preamble at the start of each block.

8. Method for distributing data according to Claim 7, **characterized in that**, the physical links having a GMII interface, the step (4.12) of insertion of a preamble is a step of insertion of a GMII preamble.

9. Method for distributing data according to one of Claim 6, **characterized in that** it further comprises a step of calculation and of insertion of a checksum for the block at the end of a block.

10. Method for distributing data according to one of Claims 6 to 9, **characterized in that** it further comprises a step of deletion of the preamble and/or of the checksum of the data packets received.
